# EUROPEAN PATENT SPECIFICATION

(11) **EP 0 630 851 B1**
(45) Date of publication and mention of the grant of the patent: **15.09.1999**
(21) Application number: 94904015.8
(22) Date of filing: 15.12.1993
(51) Int. Cl.: B66C 1/04

(54) **MAGNETIC ATTRACTION DEVICE**
MAGNETISCHE ANZIEHUNGSVORRICHTUNG
DISPOSITIF A ATTRACTION MAGNETIQUE

(30) Priority: 15.12.1992 KR 9225668 U
(43) Date of publication of application: 28.12.1994
(73) Proprietor: JUNG, Hyung, Pusanjin-ku, Pusan 614-012 (KR)
(72) Inventor: JUNG, Dong, Won, Pusanjin-ku, Pusan 614-012 (KR)
(74) Representative: May, Hans Ulrich, Dr.
(86) International application number: PCT/KR93/00113
(87) International publication number: WO 94/13573

(56) References cited:
- DE-B- 1 179 653
- JP-U- 53 126 181
- JP-U- 55 023 321
- JP-Y- 62 039 020

## Description

### Technological Field

This invention deals with a magnetic attraction device, that is a magnetic holder to be used mainly for transporting and moving various objects and machinery made of metal and other magnetic material through the magnetic force of permanent magnets.

### Background Technology

There have previously been adhesive magnetic devices aimed at achieving the above objective, most notably as registered in the Republic of Korea's Practical Inventions Patent Number 56701. In the said product, however, there are a non-magnet plate inserted in a rotor equipped with a rotating permanent magnet so that the middle parts of the front and back are made of non-magnetic material, distance maintenance mechanisms inserted at the left and right gaps of the magnetic connecting the left and right side magnets so that various permanent magnet plates may be fixed therein, and the upper part fixed with plates with multiple hooks and with various units directly connected with linking units of screw connecting devices and connecting hooks; such a design of this product has the following flaws.

First, the front and back magnetic surfaces are both at overlapping intersections so that there is the flaw of relatively excessive load and weight at that section stemming from the need for a screw and its tightening as a means of linkage similar to those of traditional pipe and piping connections, and the weakness of self-generated repulsive magnetic force at that intersection due to the overlapping of the permanent magnets which weakens the linkage status of the connecting screws, which in turn may sometimes cause large-scale accidents or at least decrease the effectiveness of the adhesive magnet due to a weakening of magnetic force.

Second, since the front and back magnetic plates are tightened with bolts, these bolts are easily loosened in case of severe impact from the outside and may weaken the magnetic force. In other words, since magnetic holders are equipment of considerable weight which are manipulated with cranes and are subject to severe impact upon striking the object to be moved, such severe impact causes the linkage status of bolt-tightened magnetic parts and plates to be weakened. In case this should happen, the arrangement of the permanent magnets within the gaps is also affected, thus not only weakening the flow of the magnets but also possibly affecting the rotation of the rotor by altering the shape of the rotor spiral (keyhole) and the screw attached therein.

Third, because the permanent magnets fixed in the left and right gaps are exposed, the adhesive magnetic force may become distributed or weakened due to a newly formed magnetic circuit from such foreign substances as metallic dust particles.

A further minor problem is the need for additional labor costs and expenses associated with scraping off any lumps which might be formed from oveflown welding liquid used for attaching the non-magnetic plate in the middle part of the magnets and obstruct the rotation of the rotor. Also, in case the rotor and distance maintenance mechanism is placed in between the front and back magnets, the assembly work becomes extremely complicated with the need for a support bar to hold those parts up safely.

DE-AS 1 179 653 discloses a magnetic holder made up of indivual units attached to each other, whereby a magnetic holding force can be created in a controlled manner. More specifically, each unit consists of a non-ferromagnetic back plate, a ferromagnetic pole plate and a rotable permanent magnet plate framed by a non-ferromagnetic element. The pole plate has a diagonal slit for diagonally separating two pole halves and the permanent magnet plate is rotatably mounted on a shaft so that it can be rotated into a position wherein the pole halves are partly shorted, and into a second position, wherein the diagonal slit between the two pole halves is in the direction of the borderline between the north and south pole of the permanent magnet plate so that the two pole halves are magnetized with opposite polarization. A plurality of units may be arranged in series and bolted together between two end plates by means of non-ferromagnetic screws extending through holes in said units.

JP 53-126181 discloses a magnetic device wherein two pole halves are separated by a vertical slit and a permanent magnet is rotably mounted in a tubular cavity between the pole halves, the axis between north and south pole being perpendicular to the longitudinal axis of the pole halves. The permanent magnet may be rotated between a first position, wherein the axis between and north and south pole is parallel to said slit and a second position wherein said axis is perpendicular to said slit.

It is the object of the present invention to provide a magnetic lifting apparatus, wherein overlap of magnetic parts is avoided and wherein the cover parts of the housing are securely mounted.

This object is accomplished by a magnetic lifting appartus according to claim 1.

In order to achieve the above objectives, this product has the following features: avoiding any overlapping of magnetic parts by alternative arrangement of the distance maintenance mechanism and the numerous magnetic parts, which had been placed inside the rotor in the previous case of direct arrangement; placing a long cross-sectional multi-sided rod which allows rotating permanent magnets to be in line with the rotor without any linking units with such connecting parts as screws and which connects the various rotors in a line so that they rotate simultaneously; and the fixing of left and right opening covers to the left and right sides of the various magnets so that the magnetic parts hold together as one and are not weakened nor their forms altered by any severe impacts from the outside, and so that the arrangement of permanent magnets in the left and right gaps of the magnetic parts are not altered and the device protected against foreign substances such as metallic dust particles adhering to the magnets. As a minor improvement, the overflow of welding liquid was avoided in the process of welding the non-magnetic part in the arrangement of the middle part of the magnet, thus dispensing with any additional touch-up work.

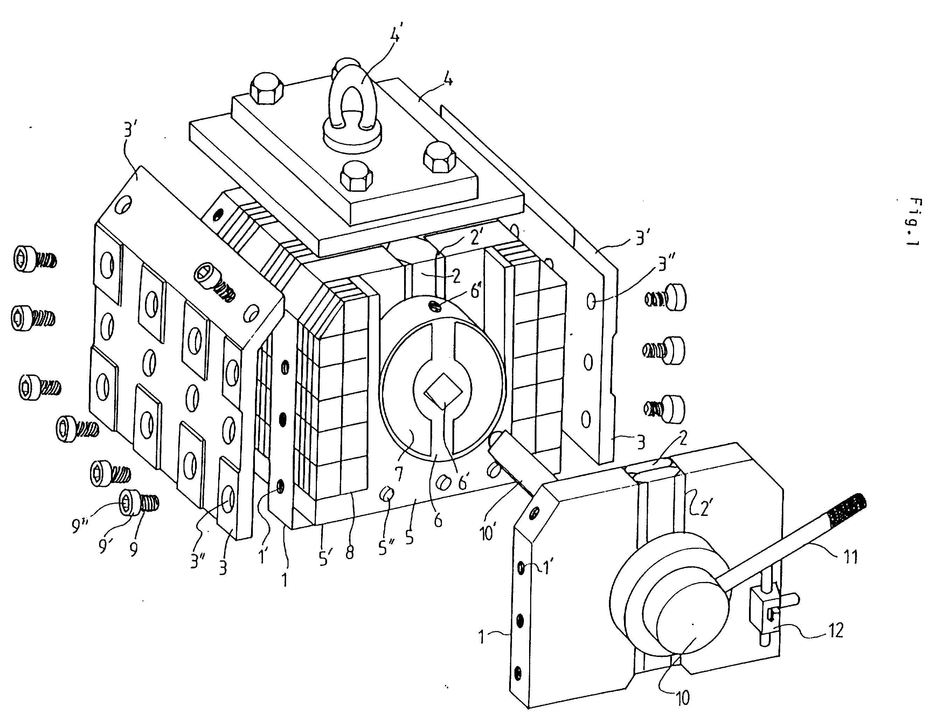

Brief Explanation of Illustrations
- Fig.1: Specific details of magnetic holder as seen in typical assembly of this invention.

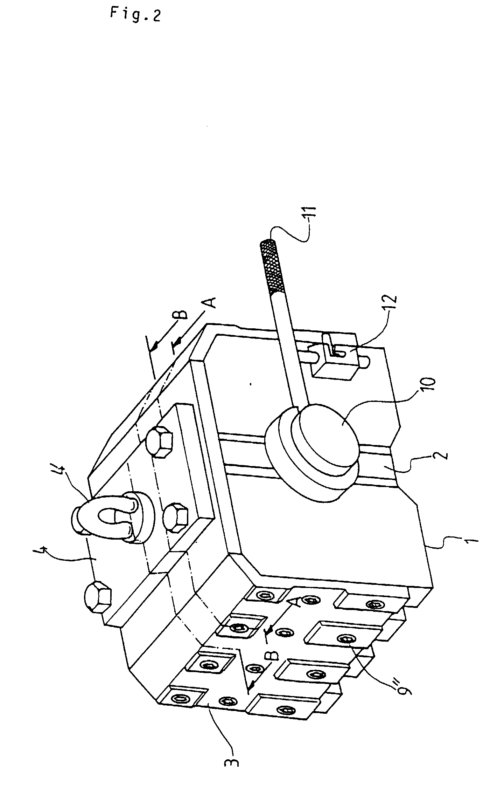

- Fig.2: General layout of magnetic holder as seen in typical assembly of this invention.

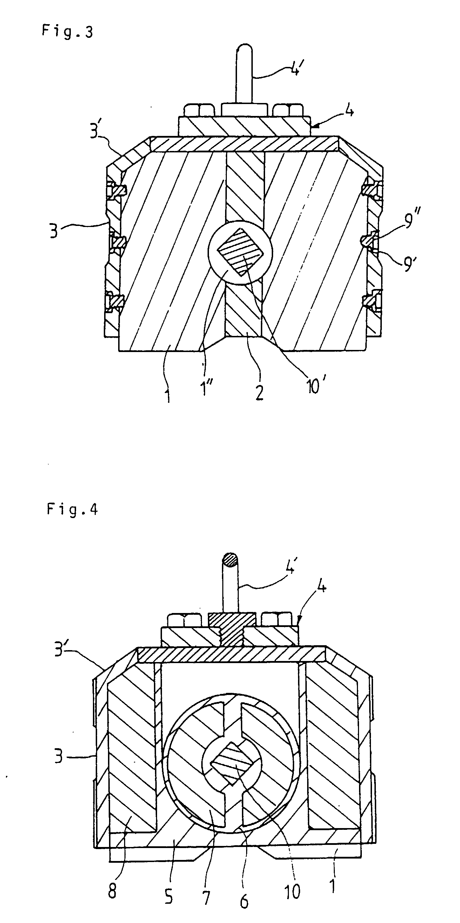

- Fig.3: Cross-section of A-A line in Fig.2.
- Fig.4: Cross-section of B-B line in Fig.2.

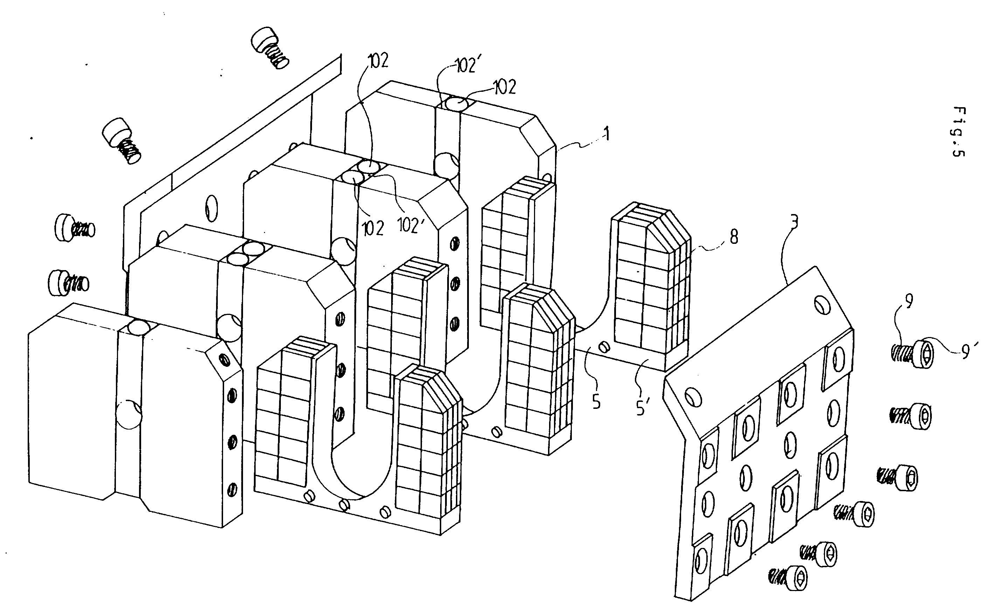

- Fig.5: Specific details of the welded state of the magnetic and non-magnetic parts as seen in typical assembly of this invention.

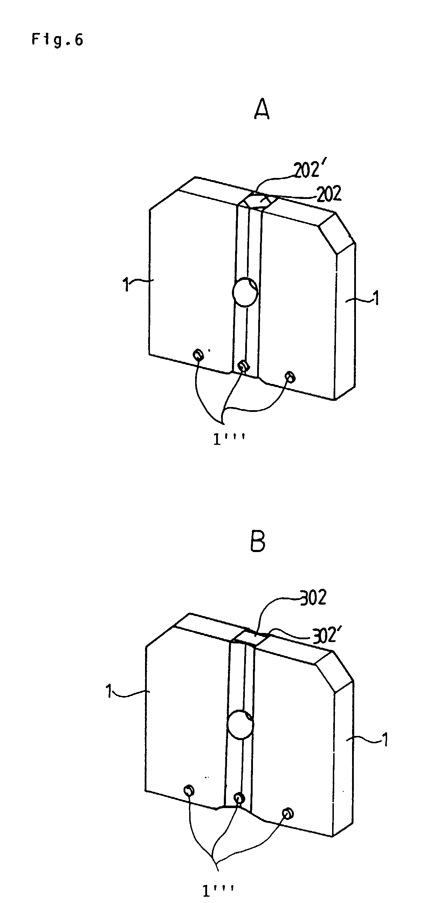

- Fig.6: A copy of Fig.5 showing the specific details of the welded state of the magnetic and non-magnetic parts with Illustration A the case in which non-magnetic part is multi-sided, and Illustration B the case in which non-magnetic part is cross-sectionally four-sided.

### Ideal State of Invention Implementation

Thus, this invention may be described as follows: plates4 with multiple hooks are connected to the upper part of the front and back magnetic parts, with rotors6 with rotating permanent magnets7 placed inside so that they may rotate, and serial arrangement in alternating fashion of various unit mechanisms with the fixed permanent magnet8 inside and distance maintenance mechanism inside the left and right gaps formed on the outside; serial insertion of distance maintenance mechanisms5 in between various magnetic parts1 so that they do not overlap and with multi-sided screws6 for rotors to be placed inside the distance maintenance mechanisms5 so numerous linking devices placed in the front and back of the distance maintenance mechanisms5 may be connected with the various linking devices in the front and back of the aforementioned magnetic parts1, with a long multi-sided rod10' connected by screws with the rotating part10 so that the various rotors6 connected in order may rotate simultaneously; and installation of various screws1 and linking devices3 to the left and right opening covers3 adjacent to the left and right sides of the aforementioned magnetic parts1 so that the magnetic parts1 and cover plates3 become a single unit by welding and fixing the head part of the screw-tightened bolt9 to the cover plates3.

Furthermore, the non-magnetic parts 102, 202, and 302 at the middle part of the aforementioned magnetic parts should be cross-sectional multi-sided or polygonal in form, and with the characteristic of the welded portion of 102, 202, and 302 fitting between the gap created between the rod and the cross-section of the magnetic parts1.

Also, the screw10 linked to the aforementioned rotor6 screw must be a long stick-like rod, with the characteristic of being hung on screw by a key.

There is an additional characteristic of the connection holes3 of the left and right opening cover3 which enable the screw holes1 at the left and right sides of the various aforementioned magnetic parts1 and this hole1 to be in line arranged so that bolts need not be used and the whole unit may be welded into a single unit.

Each side of the rotor distance maintenance mechanisms5 which are non-magnetic parts are characterized by the installation of a permanent magnet.

Inside the non-magnetic left and right opening cover3 and lid plates4 are alternating arrangements of various non-magnetic distance maintenace mechanisms 5 which protect and allow the rotor6 to rotate and various magnetic parts1 welded with the non-magnetic parts2 in the middle section, with various linking devices (5") installed at the front and back parts of the lower part of the aforementioned non-magnetic distance maintenance mechanism5 and fitted in the linking hote1"' at the bottom of the aforementioned magnetic part1, and various fixed permanent magnets8 installed at the upper portion of the support bar5' formed on the left and right outside parts of the distance maintenance mechanisms5. As for the rotors which are protected by the side of the distance maintenance mechanism5, the screw hole6' should be made into a cross-sectional multi-sided form with the screw hole6' to be connected to the screw10' made of a single rod also in a cross-sectional multi-sided shape. Furthermore, in the case that the screw hole6' is in a cross-sectional polygonal shape, the connecting rod must also be of a cross-sectional polygonal shape and the rod composed of screw hole6' and screw10' must form a key hole and be hooked on by a key. A rotating device10 manipulating the handle11 must be connected to one side of the screw10'. Various two-sided permanent magnets7 are inserted and fixed at the gap of the rotor6. Because there is a gap between a side of the magnetic part1 and the non-magnetic part2 due to the cross-sectional multi-sided rod form of the non-magnetic part placed in the middle section of the magentic part, this gap may be welded so as to be linked flatly with the welded area2'. Various screw holes1' are formed at the upper and lower portions of the left and right exteriors of the various magnetic parts1, and on the other side, linking holes3'' fitting the screw holes of the upper and lower parts of the opening covers3 are formed, so that the magnetic parts and cover3 are tightened by bolts9 when touching each other. Moreover, the head part9' of the bolts9 should be in line with the opening cover3 and must be welded with welding material. The aligned screw hole1' and the connection hole3'' may be welded together directly without having to use the conecting bolt9.

Various non-magnetic units may be placed at the middle part of the magnetic part1 and welded. As shown in Illustration 6A and 6B, a cross-sectional multi-sided non-magnetic rod 202 or a four-sided non-magnetic rod 302 with a thickness smaller than that of the magnetic part1 may be placed and welded, thus forming a flat welded surface area 202, 302 without any leakages of welding material.

The above has been a description of this invention, a magnetic holder which is to be used for the transportation and moving of various objects and machinery made of magnetic material such as steel. In case of usage, the object to be lifted must be adhered to the bottom surface by turning the handle11 so that due to the rotating permanent magnet7 at the gap of the rotor6 and the conductive magnetic effect created between the rotating permanent magnet8 installed at the left and right side of the exterior of the distance maintenance mechanism5 and the magnetic parts1, the object is adhered in case the magnetic forces coincide and the magnetic force is turned ON, while if the handle11 is turned in the reverse direction, the magnetic forces become opposite and the device is turned OFF, thus releasing the object under the same principles as states previously.

In this invention, the flaw of any repulsive magnetic force being created by the overlapping of any magnetic parts1 has been resolved by placing the various magnetic parts1 and the distance maintenance mechanisms5 in an alternating arrangement so that there are no overlapping portions of the various magnetic parts1 or distance maintenance mechanisms5 in assembling the unit. Furthermore, in case the screw hole6' of the rotor is made into a cross-sectional multi-sided form and the screw10' of the long rod to be inserted into the screw hole6' is made likewise, there is no need for keys and keyholes in assembling the unit. Also, because the linking device5" installed at the bottom of the distance maintenance mechanism5 is inserted into linking hole1''' installed at the bottom of the magnetic part1, connecting mechanisms become dispensable altogether, not to mention the ability to overcome the various problems which arise due to the instable connection of such a mechanism. And in case the various magnetic parts1 are connected by aligning them with the left and right opening covers3, because the head part9 of the connecting bolt9 is fixed at and welded into cover plates, the rotor mechanism and the fixed permanent magnets7,8 inside are safely protected in their installed states as the connecting mechanisms are protected from impact from the outside.

Furthermore, because the non-magnetic parts2, 102, 202, and 302 are welded into the middle part of the magnetic parts1 and the welded parts2, 102, 202, and 302 are contained within the device boundaries and the exterior does not become exposed, there is the advantage of being able to omit any subsequent maintenance processes, which in turn prevents any weakening of material strength as a result of those processes.

### Industrial Applications

As stated above, this invention, in case the unit is assembled properly, due to its alternating arrangement of the various magnet parts1 and distance maintenance mechanisms5 and their connection with linking parts and holes, prevents the increase of weight due to the use of linking devices as well as the generation of repulsive magnetic force. Furthermore, by making the screw hole6' of the rotor6 in a cross-sectional multi-sided shape and the screw10 of the long rod likewise and connecting them through insertions to the screw hole6, not only does the connecting apparatus become simpler but also the various rotors6 connected can rotate at the same time, thus improving the efficiency of the adhesive magnetic force. Moreover, since the the fixed permanent magnets placed in the left and right gaps formed by the various magnetic parts1 are protected by cover plates, the inflow and adhesion of foreign substances may be prevented. Also, the left and right opening covers3 are fixed to the various magnetic parts1 by connecting bolts, whose head parts are welded so that it is not affected and altered by impact from the outside and the entire device remains practical for use.

## Claims

1. A magnetic lifting apparatus comprising:
- a housing defining a pair of side walls (3) and a top cover (4), said pair of side walls (3) having an inwardly angled portion (3') extended from a top edge thereof,
- a plurality of first bolt apertures (3") disposed on said pair of side walls (3) and angled portions (3'),
- and said top cover (4) having a link member (4');
- at least three operative units positioned adjacent to each other, each of said operative units including: a pair of magnetic parts (1) having a non-magnetic center beam (2, 102; 222; 302) disposed between and welded together with said pair of magnetic parts (1) to form a back member, said back member having a lower back portion, opposing side walls, and
a plurality of linking holes (1''') disposed on the lower back portion thereof,
a distance maintenance member (5) attached to said back member, said distance maintenance member having a lower front portion, a pair of first permanent magnet seats and a rotor seat, and a plurality of linking devices (5'') disposed on the lower front portion thereof for engaging with said plurality of linking holes (1'''),
a pair of first permanent magnets (8) disposed on said pair of first permanent magnet seats,
a rotor (6) disposed on said rotor seat, said rotor (6) having an angular axial aperture (6') and a pair of second permanent magnets (7) for matching with same or different magnetic polarities of said first permanent magnets (8), and
a plurality of second bolt apertures (1') disposed on both opposing side walls of said back member for mating with said first bolt apertures (3'');
- an front member which is formed on a front end of said operative units and on a same side as said back member,
said front supporting member including a rotating member (10), an on/off switch handle (11) for engagement with a fixing member (12) attached to said extreme front supporting member, and an angular axle (10') connected to said rotating member (10); and
- a plurality of bolts (9) each having a bolt head (9'), respectively, for insertion into said first and second bolt apertures (3'', 1'), and forming a composite with said pair of side walls (3) and said top cover (4) by welding said bolt heads (9') thereto,
whereby upon rotating the on/off switch handle (11), when the first permanent magnets (8) match with the second permanent magnets (7) in the same magnetic polarity, the magnetic lifting apparatus is in an on-position to attach to an object to be lifted or moved, and
when the first permanent maqnets (8) are un-matched with the second permanent magnets (7) in opposing polarity, the magnetic liftinq apparatus is in an off-position to release from the object.

2. Apparatus according to claim 1, wherein the non-magnetic center beam (2, 202 and 302) has a multi-sided or polygonal form in cross section with a space created between the beam and the side of the magnetic part to be welded.

3. Apparatus according to claim 1, wherein the axle (10') inserted in the aperture (6') of the aforementioned rotor (6) is a long rod in shape and linked to the aperture by a key.

4. Apparatus according to claim 1, wherein said apparatus is integrated by welding without the need for use of bolts with connecting holes (3') of the left and right cover plates (3) installed to accomodate a screw and screw holes (1) placed on the left and right sides of the aforementioned magnetic parts (1).

## Patentansprüche

1. Magnetische Hebevorrichtung, welche umfaßt:
- ein Gehäuse, welches ein Paar von Seitenwänden (3) und eine obere Abdeckung (4) festlegt, wobei das Paar von Seitenwänden (3) einen nach innen abgewinkelten Teil (3') aufweist, der sich von einem oberen Rand aus erstreckt,
- mehrere erste Bolzenöffnungen (3"), welche an dem Paar von Seitenwänden (3) und abgewinkelten Abschnitten 3' angeordnet sind,
wobei die obere Abdeckung (4) ein Verbindungselement (4') aufweist,
- zumindest drei funktionelle Einheiten, welche benachbart zueinander angeordnet sind, wobei jede der funktionellen Einheiten umfaßt:
ein Paar von magnetischen Teilen (1) mit einem nichtmagnetischen Zentralstab (2, 102; 222; 302), welcher zwischen dem Paar von magnetischen Teilen (1) angeordnet und mit diesem verschweißt ist, um ein rückwärtiges Element zu bilden, wobei dieses rückwärtige Element einen unteren rückwärtigen Abschnitt aufweist,
einander gegenüberliegende Seitenwände und mehrere Verbindungslöcher (1"'), welche an dem unteren rückwärtigen Abschnitt desselben angeordnet sind,
ein Distanzhalteelement (5), welches an dem rückwärtigen Element befestigt ist, wobei das Distanzhalteelement einen unteren vorderen Bereich, ein Paar von ersten Permanentmagnetsitzen und einen Rotorsitz sowie mehrere Verbindungsvorrichtungen (5") aufweist, die auf ihrem unteren vorderen Abschnitt angeordnet sind, um in die Mehrzahl von Verbindungslöchem (1"') einzugreifen,
ein Paar von ersten Permanentmagneten (8), welche an dem Paar von ersten Permanentmagnetsitzen angeordnet sind,
einen Rotor (6), welcher an dem Rotorsitz angeordnet ist, wobei der Rotor (6) eine mit Winkeln versehene axiale Öffnung (6') und ein Paar von zweiten Permanentmagneten (7) aufweist, um denselben magnetischen Polaritäten wie denen der ersten Permanentmagnete (8) oder verschiedenen magnetischen Polaritäten zu entsprechen, und
mehrere zweite Bolzenöflhungen (1'), welche auf beiden einander gegenüberliegenden Seitenwänden des rückwärtigen Elements angeordnet sind, zum Paaren mit den ersten Bolzenöffnungen (3"),
- ein vorderes Tragelement, welches an einem vorderen Ende der funktionellen Einheiten und auf derselben Seite wie das rückwärtige Element ausgebildet ist, wobei das vordere Tragelement ein sich drehendes Element (10), einen An/Aus-Schaltgriff (11) zum Angreifen an ein Befestigungselement (12), das auf der äußersten Vorderseite des Tragelements befestigt ist, und eine mit Winkeln versehene Achse (10') aufweist, die mit dem sich drehenden Element (10) verbunden ist, und
- mehrere Bolzen (9), welche jeweils einen Bolzenkopf(9') aufweisen, zum Einführen in die ersten und zweiten Bolzenöffnungen (3", 1') und zum Bilden eines Verbunds mit dem Paar von Seitenwänden (3) und der oberen Abdeckung (4) durch Anschweißen der Bolzenköpfe (9'),
wobei beim Drehen des An/Aus-Schaltgriffs (11), wenn die ersten Permanentmagnete (8) den zweiten Permanentmagneten (7) mit derselben magnetischen Polarität entsprechen, das magnetische Hebegerät sich in einer An-Stellung befindet, um sich mit einem Objekt zu verbinden, das gehoben oder bewegt werden soll,
und, wenn die ersten Permanentmagnete (8) mit einer entgegengesetzten Polarität den zweiten Permanentmagneten (7) nicht entsprechen, die magnetische Hebevorrichtung sich in einer Aus-Stellung zum Lösen von dem Objekt befindet.

2. Vorrichtung nach Anspruch 1, bei welcher der nichtmagnetische Zentralstab (2, 202 und 302) eine mehrseitige oder polygonale Form im Querschnitt hat, wobei ein Zwischenraum zwischen dem Stab und der Seite des zu verschweißenden magnetischen Teils erzeugt wird.

3. Vorrichtung nach Anspruch 1, bei der die Achse (10'), die in die Öffnung (6') des vorangehend genannten Rotors (6) eingefügt wird, die Form eines langen Stabes hat und mit der Öffnung durch einen Schlüssel verbunden ist.

4. Vorrichtung nach Anspruch 1, welche durch Schweißen ohne die Notwendigkeit der Benutzung von Bolzen zusammengefügt ist, wobei Verbindungslöcher (3') der linken und rechten Deckplatten (3) installiert sind, um eine Schraube aufzunehmen, und Schraubenlöcher (1) auf der linken und rechten Seite der vorangehend genannten magnetischen Teile (1) angeordnet sind.

## Revendications

1. Appareil de levage magnétique comprenant:
- un boîtier définissant une paire de parois latérales (3) et un cache supérieur (4), ladite paire de parois latérales (3) ayant une portion inclinée vers l'intérieur (3') se prolongeant à partir d'un bord supérieur de celui-ci,
- une pluralité de premières ouvertures de vis (3") disposées sur ladite paire de parois latérales (3) et de portions inclinées (3'),
- et ledit cache supérieur (4) ayant un élément de liaison (4');
- au moins trois unités opérantes disposées de façon adjacente l'une à l'autre, chacune desdites unités opérantes comprenant: une paire de guides magnétiques (1) ayant une barre centrale non magnétique (2, 102; 222; 302) disposés entre et soudés conjointement avec ladite paire de guides magnétiques (1) afin de former un élément arrière, ledit élément arrière ayant une portion arrière inférieure, des parois latérales opposées, et
une pluralité de trous de liaison (1"') disposés sur la portion arrière inférieure de celle-ci,
un élément de maintien des distances (5) fixé audit élément arrière, ledit élément de maintien des distances ayant une portion avant inférieure, une paire de premiers sièges d'aimant permanent et un siège de rotor, et une pluralité de dispositifs de liaison (5") disposés sur la portion avant inférieure de celui-ci pour venir en prise avec ladite pluralité de trous de liaison (1"'),
une paire de premiers aimants permanents (8) disposés sur une paire de premiers sièges d'aimant permanent,
un rotor (6) disposé sur ledit siège de rotor, ledit rotor (6) ayant un passage axial anguleux (6') et une paire de deuxièmes aimants permanents (7) en vue d'un appariement avec les polarités magnétiques identiques ou différentes desdits premiers aimants permanents (8), et
une pluralité de deuxièmes ouvertures de vis (1') disposées sur les deux parois latérales opposées dudit élément arrière pour s'accoupler auxdites premières ouvertures de vis (3");
- un élément support avant qui est formé sur une extrémité avant desdites unités opérantes et sur un même côté que ledit élément arrière,
ledit élément support avant comprenant un élément tournant (10), une poignée de commutateur marche/arrêt (11) destinée à venir en prise avec un élément de fixation (12) fixé audit élément support avant extrême et un axe anguleux (10') relié audit élément tournant (10); et
- une pluralité de vis (9) chacune possédant une tête de boulon (9'), respectivement, en vue d'une insertion dans lesdites première et deuxième ouvertures de boulon (3", 1'), formant un composite avec ladite paire de parois latérales (3) et ledit cache supérieur (4) au moyen d'un soudage desdites têtes de vis (9') à celles-ci,
lors de la rotation de la poignée de commutateur marche/arrêt (11), lorsque les premiers aimants permanents (8) sont appariés aux deuxièmes aimants permanents (7) avec la même polarité magnétique, le dispositif de levage magnétique se trouve ainsi dans une position enclenchée afin de fixer un objet à soulever ou à déplacer, et
lorsque les premiers aimants permanents (8) ne sont pas appariés avec les deuxièmes aimants permanents (7) avec une polarité opposée, le dispositif de levage magnétique se trouvant ainsi dans une position déclenchée permettant de libérer l'objet.

2. Appareil selon la revendication 1, dans lequel la barre centrale non magnétique (2, 202 et 302) possède une forme à pans multiples ou polygonale en section avec un espace créé entre la barre et le côté de la pièce magnétique à souder.

3. Appareil selon la revendication 1, dans lequel l'axe (10') inséré dans le passage (6') du rotor susmentionné (6) a une forme de barre longue et est en prise avec le passage comme une clé.

4. Appareil selon la revendication 1, dans lequel ledit appareil est assemblé par soudage sans avoir besoin d'utiliser de boulons ayant des trous de liaison (3') des plaques de cache gauche et droit (3) installées pour loger une vis et des trous de vis (1) placés sur les côtés gauche et droit des pièces magnétiques susmentionnées (1).
